# EUROPÄISCHE PATENTANMELDUNG

(11) **EP 1 508 518 A1**
(43) Veröffentlichungstag der Anmeldung: **23.02.2005**
(21) Anmeldenummer: 04018810.4
(22) Anmeldetag: 09.08.2004
(51) Int. Cl.: B64G 1/64, B64D 1/02, F41F 3/048, F41F 7/00

(54) **Auswurfvorrichtung für drallstabilisierte Raumflugkörper**

(30) Priorität: 19.08.2003 DE 10337973
(71) Anmelder: EADS Space Transportation GmbH, 28199 Bremen (DE)
(72) Erfinder: Bank, Christian, Dipl.-Ing., 28237 Bremen (DE); Kolloge, Hans-Georg, Dipl.-Ing., 27793 Wildeshausen (DE)
(74) Vertreter: Hansmann, Dierk, Dipl.-Ing.

(57) **Zusammenfassung**

Bei einer Vorrichtung zum Auswurf von drallstabilisierten Flugkörpern (1) aus einem übergeordneten Raumflugkörper, insbesondere aus einer Raumstation, bei der der auszustoßende Flugkörper (1) über ein Drehantriebselement (6) in eine kombinierte Rotations- und Translationsbewegung versetzt wird und bei der Mittel zum Haltern und zum Führen des auszustoßenden Flugkörpers in einem Auswurfbehälter (2) vorgesehen sind, ist der auszustoßende Flugkörper (1) mittels Kugeln (5) im Auswurfbehälter (2) gelagert, die in wenigstens einer spiralförmig in Ausstoßrichtung ansteigenden Rillenbahn (3,4) zwischen der Außenwand des Flugkörpers und der Innenwand des Auswurfbehälters angeordnet sind.

## Beschreibung

Die Erfindung betrifft ein Vorrichtung zum Auswurf von drallstabilisierten Raumflugkörpern aus einem übergeordneten Raumflugkörper, insbesondere einer Raumstation, wobei der auszustoßende Flugkörper über ein Antriebselement in eine kombinierte Rotations- und Translationsbewegung versetzt wird und wobei Mittel zum Haltern und zum Führen des auszustoßenden Flugkörpers in einem Auswurfbehälter vorgesehen sind.

In der Vergangenheit wurde eine Reihe derartiger Auswurfvorrichtungen für Raumflugkörper aus Satelliten entwickelt, so zum Beispiel zur Anwendung in Spionagesatelliten zum Ausstoß von Rückkehrkapseln mit belichteten Filmen. Bei diesen Anwendungen waren die Masse und Dimensionen der ausgestoßenen Subkörper vergleichsweise gering. Weitere Vorrichtungen wurden für die Aussetzung von drehachsen- oder spinstablisierten Kommunikationssatelliten oder von Kleinsatelliten aus dem Space Shuttle entwickelt. Bei ersteren handelte es sich um Flugkörper mit deutlich größeren Dimensionen, beispielsweise mit Durchmessern größer als 2,5 Metern, und mit einer vergleichsweise hohen Masse, bei letzteren um Flugkörper mit geringerer Dimension und kleinerer Masse. In beiden Fällen erfolgte der Ausstoß der Raumflugkörper aus einem nicht druckbeaufschlagten Behälter und die Anforderungen an die Ausrichtgenauigkeit der auszustoßenden Satelliten waren relativ gering, da eine nachträgliche Lageregelung durch den ausgestoßenen Satelliten selbst erfolgte. Ähnliche Vorrichtungen sind auch für wiedereintrittskapseln mit mittleren Dimensionen bekannt geworden.

Jede dieser bekannten Vorrichtungen nutzt separate, in einen Container installierte Mechanismen, wie Motoren, Federdruck oder Explosionsschnüre, um den auszustoßenden Flugkörper zunächst zum Zweck der Spinstabilisierung in Rotation zu versetzen und ihn dann für den Ausstoß zu beschleunigen. Zusätzlich sind bei diesen bekannten Vorrichtungen Mittel zum Haltern und zum Führen des auszustoßenden Flugkörpers vorgesehen.

Weiterhin ist im zusammenhang mit einem in der Entwicklung befindlichen sogenannten "Orbital Payload Retrieval System" (OPRS) eine Ausstoßvorrichtung der eingangs genannten Art vorgeschlagen worden, bei der Astronauten an Bord der Internationalen Raumstation ISS einen Ausstoßmechanismus handhaben, indem sie diesen installieren, testen und schließlich scharf schalten.

Ein wesentlicher Nachteil der bisher bekannt gewordenen Ausstoßvorrichtungen ist ihr verhältnismäßig hohes Gewicht, ihr komplexer Aufbau und, insbesondere bei einer Verwendung in bemannten Orbitalmissionen, die Verwendung von Explosivstoffen und/oder von starken Spiralfedern, die bei fehlerhafter Auslösung ein hohes Verletzungsrisiko für die Astronauten in sich bergen, die sich in unmittelbarer Nähe der Ausstoßvorrichtung befinden oder sie installieren müssen.

Der Erfindung liegt die Aufgabe zugrunde, eine Ausstoßvorrichtung der eingangs genannten Art so auszubilden, daß sie inhärent sicher, zudem leicht und zuverlässig ist und den auszustoßenden Flugkörper in eine vorab exakt festlegbare Kombination aus Translations- und Rotationsbewegung zu versetzen vermag.

Diese Aufgabe wird dadurch gelöst, daß bei einer derartigen Vorrichtung der auszustoßende Flugkörper mittels Kugeln im Auswurfbehälter gelagert ist, die in wenigstens einer spiralförmig in Ausstoßrichtung ansteigenden Rillenbahn zwischen der Außenwand des Flugkörpers und der Innenwand des Auswurfbehälters angeordnet sind, und daß das Antriebselement als Drehantriebselement ausgebildet ist.

Die erfindungsgemäße Vorrichtung verwendet als Drehantrieb entweder eine Drehfeder oder einen Elektromotor und kombiniert die Erzeugung der Rotationsbewegung zur Spinstabilisierung des auszustoßenden Flugkörpers mit der für den Ausstoßvorgang erforderlichen Translationsbewegung durch eine mechanische Kopplung dieser beiden Bewegungen über die erfindungsgemäß vorgesehenen,. in der Rillenbahn gelagerten und geführten Mitnehmerkugeln.

Diese Ausbildung der Vorrichtung gemäß der Erfindung bietet eine Reihe von Vorteilen, zu deren wesentlichen die vermeidung von Explosivstoffen in einem bemannten Raumfahrzeug und damit Eliminierung eines erheblichen Gefährdungspotentials für die Astronauten ebenso gehören wie die Minimierung von Gewicht und Volumen der Mechanik für die Drallstabilisierung sowie für den Auswurf und damit die Minimierung der Gesamtmasse des Raumflugsystem bzw. die Maximierung der verfügbaren Nutzlastmasse und des Nutzlastvolumens. Weitere Vorteile liegen in der Reduzierung der Komplexität des Auswurfmechanismus durch eine Verringerung der Anzahl der erforderlichen mechanischen und elektrischen Funktionsteile und damit einhergehend eine Maximierung der Zuverlässigkeit und der Effizienz der Anordnung. Bei der in einer bevorzugten Ausführungsform der Erfindung vorgesehenen Verwendung einer Drehfeder bedarf der Ausstoßvorgang zudem keiner elektrischen Energie seitens des ausstoßenden übergeordneten Raumflugkörpers oder der Kapsel, wodurch spezielle Anforderungen an eine Starkstromversorgung der Kapsel bzw. des Ausstoßmechnismus im übergeordneten Raumflugkörper vermieden werden.

vorteilhafte Weiterbildungen der erfindungsgemäßen Vorrichtung sind in den weiteren Ansprüchen enthalten. Indem das erste Teilstück der Rillenbahn, vorzugsweise weniger als ein voller Umlauf, zunächst ohne Steigung ausgeführt ist, bevor die Bahn dann allmählich in die konstruktiv vorgegebene Steigung übergeht, erfolgt der Beginn der Rotationsbeschleunigung ohne jeden Anfangswiderstand, wodurch die Effizienz der Energieübertragung wesentlich verbessert wird.

Bei der in einer bevorzugten Ausführungsform der Erfindung vorgesehenen Verwendung einer Drehfeder kann, anstatt die Drehfeder bereits am Boden vorzuspannen, die Federachse durch den Boden des Auswurfbehälters geführt und mittels eines geeigneten Werkzeuges, beispielsweise eines Drehmomentschlüssels, erst unmittelbar vor Beginn der Rückkehrmission gespannt werden. Dadurch ist der gesamte Mechanismus während der Installation durch die Astronauten energielos und ein mögliches Verletzungsrisiko wird praktisch eliminiert. Zur Reduzierung des zur Spannung der Drehfeder benötigten Drehmomentes kann in vorteilhafter Weiterbildung der erfindungsgemäßen Vorrichtung ferner ein Reduktionsgetriebe vorgeschaltet werden.

Bei einer Verwendung von nicht gefangenen und somit frei zwischen den Wandungen des auszustoßenden Flugkörpers und des Auswurfbehälters beweglichen Kugeln sind vorzugsweise am Ende der Rillenbahn Kugelfallen vorgesehen, die z.B. als Schneckenlabyrinthe ausgebildet sein können und die bewirken, daß die Kugeln nicht in den Weltraum entweichen, sondern im Inneren der Raumstation verbleiben.

Durch in vorteilhafter Weiterbildung der Erfindung ferner im Boden des Auswurfbehälters vorgesehene Bohrungen kann schließlich der gesamte oder ein vorher festlegbarer Teil des Druckes im druckbeaufschlagten Modul des übergeordneten Raumflugkörpers bzw. der Raumstation zur Beschleunigung des auszustoßenden Flugkörpers bzw. der Kapsel ausgenutzt werden, indem der Luftdruck aus dem Inneren der Raumstation auf den auszustoßenden Flugkörper einwirkt und diesen zusätzlich beschleunigt.

Nachfolgend soll die Erfindung anhand eines in der zeichnung dargestellten Ausführungsbeispiels näher erläutert werden. Es zeigen
Fig. 1 eine Gesamtanordnung mit einem Schnitt durch einen Auswurfbehälter sowie einen soeben ausgestoßenen Flugkörper,
Fig. 2 einen Schnitt durch den Auswurfbehälter und einen Teil eines darin liegenden auszustoßenden Flugkörpers und
Fig. 3 einen Blick in das Innere eines aufgeschnittenen Auswurfbehälters.

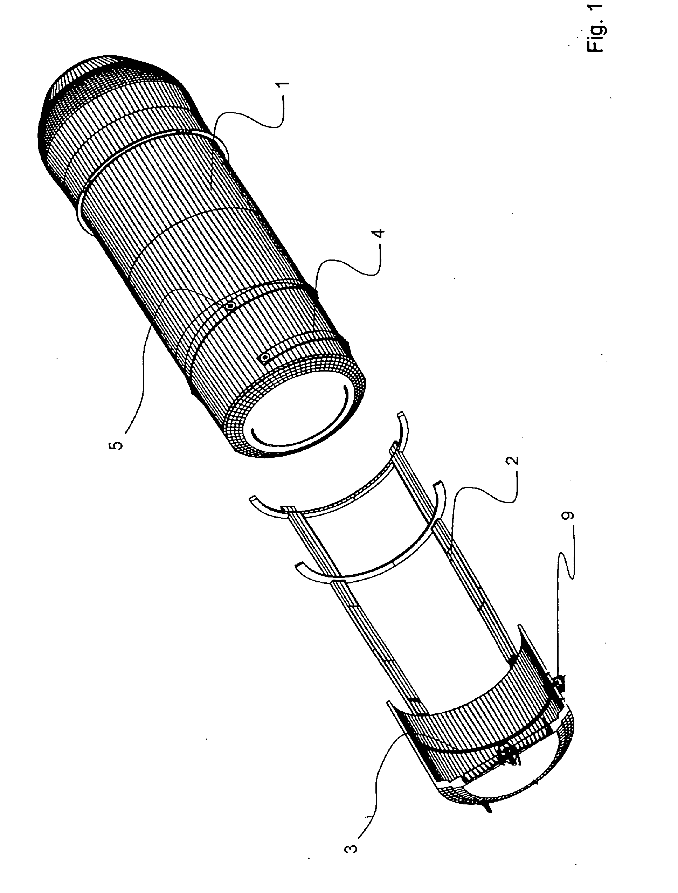

Bei der in Fig. 1 dargestellten Gesamtanordnung befindet sich ein Flugkörper 1 unmittelbar nach dem erfolgten Ausstoßvorgang außerhalb eines Auswurfbehälters 2. Die Darstellung zeigt sowohl auf der Außenwand des Flugkörpers 1 als auch in dem abgebildeten Teilbereich der Innenwand des aufgeschnitten dargestellten Auswurfbehälters 2 jeweils spiralförmige Rillenbahnen 3, 4, in denen Kugeln 5 frei beweglich angeordnet sind. Diese Mitnehmerkugeln 5 fungieren während des Ausstoßvorganges gleichzeitig als Lager- und als Führungskugeln.

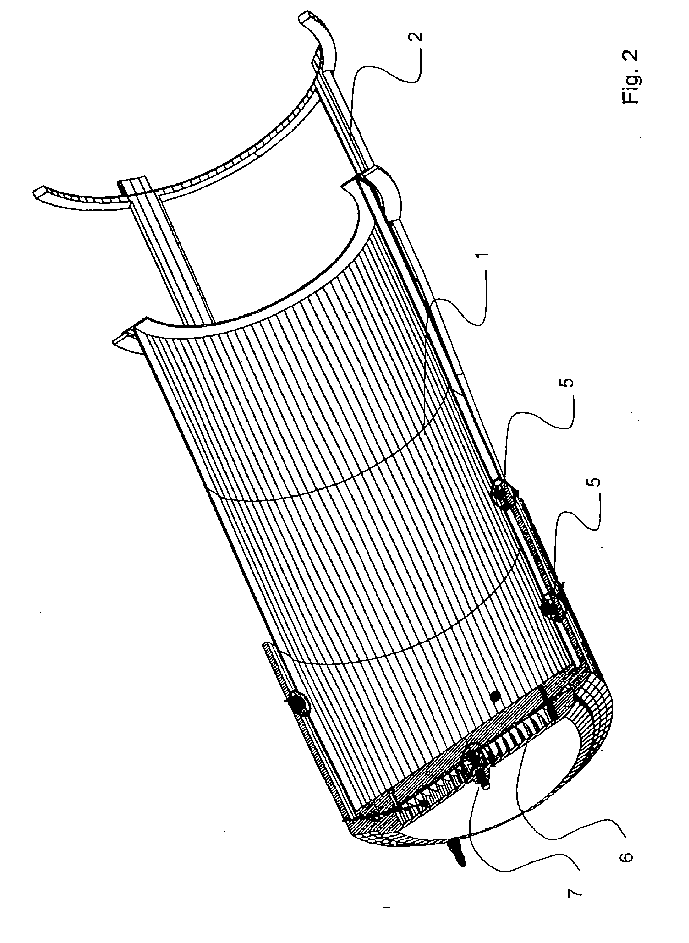

Die Lagerung der Kugeln 5 zwischen der Außenwand des Flugkörpers 1 und der Innenwand des Auswurfbehälters 2 ist auch noch einmal aus der vergrößerten Detaildarstellung in Fig. 2 zu ersehen, bei der der Flugkörper 1 bzw. der untere Teilbereich desselben im Auswurfbehälter 2 liegend dargestellt ist. In dieser vergrößerten Darstellung ist auch die am Boden des Auswurfbehälters 2 angeordnete Drehantriebvorrichtung in Gestalt einer Drehfeder 6 erkennbar. Die Achse 7 der Drehfeder 6 ist durch den Boden des Auswurfbehälters 2 geführt und kann dadurch mittels eines geeigneten Werkzeuges, beispielsweise eines Drehmomentschlüssels, erst unmittelbar vor Beginn des Ausstoßvorganges gespannt werden, so daß diese nicht bereits vor Beginn einer Mission auf der Erde vorgespannt werden muß. Zur Reduzierung des zur Spannung der Drehfeder 6 benötigten Drehmoments kann ferner ein in der Zeichnung nicht dargestelltes Reduktionsgetriebe vorgeschaltet werden.

Angemerkt sei, daß anstelle der bei dem hier dargestellten Ausführungsbeispiel vorgesehenen Drehfeder auch ein elektrisch aktivierter Mechanismus, insbesondere ein Elektromotor, vorgesehen werden kann.

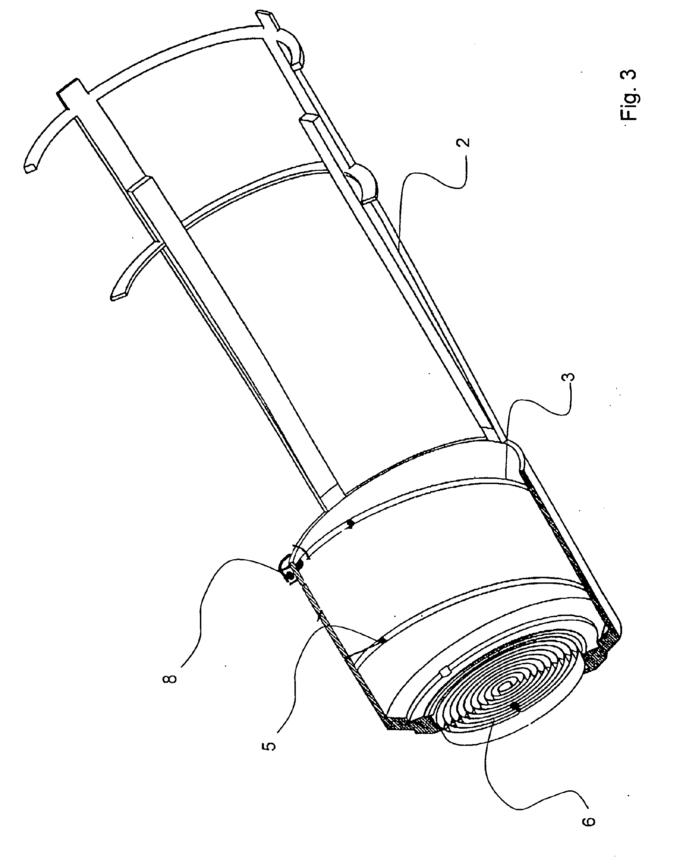

Die Darstellung gemäß Fig. 3 zeigt schließlich einen Blick in das Innere des aufgeschnitten dargestellten Auswurfbehälters 2, wobei auch ein Auffangbehälter 8 für die Kugeln 5 zu erkennen ist, wie sie am Ende der Rillenbahn 3 angeordnet sind. Diese können beispielsweise als Schneckenlabyrinthe ausgebildet sein und bewirken, daß die Kugeln 5 nicht in den Weltraum entweichen und dort eine potentielle Gefährdung darstellen, sondern in der Raumstation verbleiben.

Der auszustoßende Flugkörper 1 wird von der in einen ausgleitfähigen Mitnehmerzapfen greifenden Drehfeder, die erst im Orbit unmittelbar vor der Installation gespannt wird, bzw. von dem elektrisch aktivierten Mechanismus zu Beginn des Ausstoßvorgangs in eine Drehung versetzt, wodurch sich die Kugeln 5 in den Rillen 3, 4 bewegen und sich der Flugkörper 1, geführt durch die Kugeln 5, entlang der Rillenbahnen nach vorne aus dem Auswurfbehälter 2 bewegt, indem ein Teil der ursprünglich übertragenen Rotationsenergie über die in den Rillen 3, 4 laufenden Mitnehmerkugeln 5 in Translationsenergie umgewandelt wird.

Ausgelöst wird der Ausstoßvorgang durch das Zurückziehen eines in die Rillenbahn ragenden Sperrzapfens 9, der bis zum Startzeitpunkt eine der Kugeln 5 blockiert. Das Zurückziehen des Sperrzapfens 9 kann beispielsweise durch einen nicht explosiven Paraffinaktuator erfolgen, der stoßfrei und mit geringem Energiebedarf aktivierbar ist.

Die aufgrund der Konstruktion festgelegte Steigung der Rillen 3, 4 führt zu einem exakt definierten Verhältnis zwischen Rotations- und Translationsgeschwindigkeit, so daß das zur Spinstabilsierung benötigte optimale Verhältnis zwischen Rotations- und Translationsenergie des Flugkörpers 1 in jedem Fall gewährleistet ist.

Indem bei dem hier beschriebenen Ausführungsbeispiel das erste Teilstück der Rillenbahn, vorzugsweise weniger als ein voller Umlauf, zunächst ohne Steigung ausgeführt ist ,bevor die Bahn dann in die konstruktiv vorgegebene Steigung übergeht, erfolgt der Beginn der Rotationsbeschleunigung praktisch ohne jeden Anfangswiderstand, wodurch die Effizienz der Energieübertragung wesentlich erhöht wird.

Durch in der Behälterwandung im Raum zwischen der Wandung des Auswurfbehälters und dem Boden des auszustoßenden Flugkörpers vorgesehene Bohrungen kann schließlich der gesamte oder ein vorher festlegbarer Teil des Druckes im druckbeaufschlagten Modul des übergeordneten Raumflugkörpers bzw. der Raumstation zur Beschleunigung des auszustoßenden Flugkörpers bzw. der Kapsel ausgenutzt werden, indem der Luftdruck aus dem Inneren der Raumstation auf den auszustoßenden Flugkörpers einwirkt und ihn zusätzlich beschleunigt.

Abschließend sei angemerkt, daß es im Rahmen der Erfindung möglich ist, die Rillenbahnen entweder sowohl auf der Außenwand des Flugkörpers 1 als auch in der Innenwand des Auswurfbehälters 2 anzuordnen oder aber, alternativ dazu, diese nur in einem der beiden Bereiche vorzusehen.

## Patentansprüche

1. Vorrichtung zum Auswurf von drallstabilisierten Flugkörpern aus einem übergeordneten Raumflugkörper, insbesondere einer Raumstation, wobei der auszustoßende Flugkörper über ein Antriebselement in eine kombinierte Rotations- und Translationsbewegung versetzt wird und wobei Mittel zum Haltern und zum Führen des auszustoßenden Flugkörpers in einem Auswurfbehälter vorgesehen sind, **dadurch gekennzeichnet, daß** der auszustoßende Flugkörper (1) mittels Kugeln (5) im Auswurfbehälter (2) gelagert ist, die in wenigstens einer spiralförmig in Ausstoßrichtung ansteigenden Rillenbahn (3, 4) zwischen der Außenwand des Flugkörpers (1) und der Innenwand des Auswurfbehälters (2) angeordnet sind, und daß das Antriebselement (6) als Drehantriebselement ausgebildet ist.

2. Vorrichtung nach Anspruch 1, **dadurch gekennzeichnet, daß** wenigstens eine Rillenbahn (3) in der Innenwandung des Auswurfbehälters (2) angeordnet ist.

3. Vorrichtung nach Anspruch 1 oder 2, **dadurch gekennzeichnet, daß** wenigstens eine Rillenbahn (4) in der Außenwand des Flugkörpers (1) angeordnet ist.

4. Vorrichtung nach Anspruch 1 bis 3, **dadurch gekennzeichnet, daß** die Rillenbahn (3, 4) in einem ersten, dem Boden des Auswurfbehälters (2) benachbarten Teilbereich ohne Steigung ausgeführt ist und erst in einem zweiten Teilbereich eine Steigung aufweist.

5. Vorrichtung nach einem der Ansprüche 1 bis 4, **dadurch gekennzeichnet, daß** am Ende der Rillenbahn (3) Kugelfallen (9) angeordnet sind.

6. Vorrichtung nach einem der Ansprüche 1 bis 5, **dadurch gekennzeichnet, daß** das Antriebselement aus einer Drehfeder (6) besteht.

7. Vorrichtung nach Anspruch 6, **dadurch gekennzeichnet, daß** die Achse (8) der Drehfeder (6) durch den Boden des Auswurfbehälters (2) geführt und mittels eines zugeordneten Werkzeuges spannbar ist.

8. Vorrichtung nach Anspruch 7, **dadurch gekennzeichnet, daß** ein Reduktionsgetriebe vorgeschaltet ist.

9. Vorrichtung nach einem der Ansprüche 1 bis 5, **dadurch gekennzeichnet, daß** das Antriebselement aus einem Elektromotor besteht.

10. Vorrichtung nach einem der Ansprüche 1 bis 9, **dadurch gekennzeichnet, daß** im Boden des Auswurfbehälters (2) Bohrungen vorgesehen sind, über die Luft einleitbar ist.
